# EUROPEAN PATENT APPLICATION

(11) **EP 4 645 163 A1**
(43) Date of publication of application: **05.11.2025**
(21) Application number: 24173620.6
(22) Date of filing: 30.04.2024
(51) Int. Cl.: G06N 3/044, G06N 3/0455, G06N 3/09, G06N 3/096, G08B 31/00, G06Q 50/26, G08B 21/10

(54) **A COMPUTER-IMPLEMENTED METHOD OF TRAINING AN ENCODER NEURAL NETWORK FOR USE WITH AN ONLINE PREDICTION MODEL, DATA PROCESSING APPARATUS, AND COMPUTER PROGRAM**

(71) Applicant: FUJITSU LIMITED, Kawasaki-shi, Kanagawa 211-8588 (JP)
(72) Inventor: OROJO, Oluwatamilore, Slough, SL1 2BE (GB); OLMEZ, Sedar, Slough, SL1 2BE (GB)
(74) Representative: Haseltine Lake Kempner LLP

(57) **Abstract**

A computer-implemented method of training an encoder neural network of an autoencoder, the method comprising: receiving a data stream at the autoencoder, the autoencoder comprising an encoder neural network, a decoder neural network, a first memory layer, and a second memory layer; and incrementally training the encoder neural network on the data stream, wherein each training step of the incremental training comprises: receiving a portion of the data stream as input data at the encoder neural network; performing an encoding process on the input data by the encoder neural network to obtain a latent representation of the input data; storing encoded input data that was generated by the encoder neural network during the encoding process in the first memory layer; processing the encoded input data and encoded input data stored in the first memory layer from previous iterations of the training steps to create a memory representation; storing the memory representation and the latent representation in the second memory layer; processing the memory representation and the latent representation to update the memory representation; performing a decoding process on the latent representation by the decoder neural network; storing decoded input data that was generated by the decoder neural network during the decoding process in the second memory layer; processing the decoded input data and the updated memory representation to refine the updated memory representation; and outputting the refined memory representation to the encoder neural network for use in the next training step.

## Description

### TECHNICAL FIELD

The present invention relates to a computer-implemented method of training an encoder neural network for use with an online prediction model, and related data processing apparatus, emergency response management system, computer program, and computer-readable storage medium.

### BACKGROUND

The abundance of data and need for up-to-date and accurate information is crucial in providing informed real-time decisions across various domains. Consequently, there is a growing demand for techniques and models that can effectively facilitate real-time processing.

Traditional offline (batch) processing models face a trade-off between significant real-time lag and increased computational demands primarily stemming from subsequent retraining. The real-time lag arises from the time lapse between data becoming available or being collected and its processing. Mitigating this real-time lag requires continuous retraining, which can increase computational costs as the dataset increases. To ensure a balance between this trade-off and due to resource limitations, the frequency of model retraining may be restricted. However, this gives rise to data staleness, which is both costly and detrimental for real-time tasks.

The rise and need for real-time models have warranted the use of online processing techniques. Models employing this approach make use of each data instance or set as soon as it becomes available, or shortly after, to update their architecture. This updating process aims to enhance predictive performance for future data instances or sets. This enhances the accuracy and correctness especially when dealing with continuous streams of data in many real-world applications. In addition, these models offer greater flexibility than offline models as the data distribution changes. Despite the significant progress made, especially in the context of real-time tasks, there are still some challenges associated with online learning, particularly in the case of supervised online learning that can hinder its overall performance, notably: (i) computational inefficacy, (ii) catastrophic forgetting, and (iii) concept drift.

Computational efficacy in online models is important for maintaining low real-time latency, responsiveness to concept drift, and the ability to provide rapid real-time processing and updates. However, computational efficiency conflicts with the need to incorporate a comprehensive set of features and drivers to maintain an up-to-date, real-time, and real-world perspective. Balancing these two conflicting demands is important for ensuring that models can deliver timely and accurate insights into real-time interactions and dynamics in the real world.

Online models can be fine-tuned to significantly reduce the real-time delay, however this optimization is not without its drawbacks. It heightens other limitations that significantly affect the model's performance and predictive capabilities. Notably, the vulnerabilities include noise sensitivity, the loss of historical information, and increased complexity as the feature space expands, among other significant constraints.

Furthermore, online models tend to lose historical context and are susceptible to the influence of noise, both of which can have a significant impact on the model's overall performance. This is especially detrimental when historical context is important for making accurate predictions or when detecting long-term trends and thus overlooking critical insights from the past, potentially leading to less effective decision-making.

In an attempt to simultaneously mitigate the first challenge, incremental learning autoencoders have been employed to enable a reduced feature dimension for online models and thus enhance computational efficacy. Autoencoders provide a mechanism to detect drifts in data distribution. In particular, autoencoders coupled with incremental learning and concept drift adaptation significantly outperforms baseline and advanced models.

However, incrementally trained models still largely suffer from catastrophic forgetting, where the model forgets historical context as new information is learnt. Efforts to mitigate this limitation include: (1) regularization strategies, (2) rehearsal approaches, and (3) memory mechanisms. Of these approaches, regularization strategies have no clear advantages over fine-tuning and perform relatively worse than rehearsal approaches. But the significant computational overheard of rehearsal approaches limits their utility. Memory mechanisms, on the other hand, appear to offer a promising approach.

Various forms of memory mechanisms for neural models have been explored to preserve long-term memory (and thus harness predictive abilities) which can mitigate catastrophic forgetting.

Examples include Memory-Augmented Autoencoders (MemAE), Feedback Recurrent Autoencoder (FRAE), Memory-augmented Adversarial Autoencoders with Deep Reconstruction and Prediction (MemAAE), Variational Autoencoder-based memory-augmented network (MEMVAE), Cluster Memory-Augmented Autoencoders via Optimal Transportation (OTCMA), and Clear Memory-Augmented Autoencoders (CMAM). These model developments have been shown to enhance model performance specifically for anomaly detection. MemAE uses encodings to retrieve the most relevant memory items for reconstruction. The memory contents are trained to represent prototypical elements of the 'normal' data. Reconstruction is obtained from selected memory records of the 'normal' data ensuring reconstructions will tend to be close to a normal sample. Thus, strengthening the reconstruction error on anomalies. MEMVAE adopts an external memory for the latent space which is queried when inputs are received for the most relevant items and combined before passing to the decoder. The MEMVAE employs a sparse hard-shrink addressing strategy, encouraging the model to efficiently use limited storage to achieve low average reconstruction error. OTCMA employs a deep clustering technique based on Optimal Transportation to enhance feature consistency of same category samples and feature discrimination of different category samples. More consistent features are retrieved from the memory module for reconstruction rather than reconstructing based on encoding, thus limiting the model's reconstruction ability and preventing reconstruction anomalies.

Other autoencoder variants, such as Adaptive Autoencoders and Recurrent Autoencoders, have been adapted for better handling of temporal data and provide some capabilities for handling complex temporal dependencies and dynamics which can support other tasks. Adaptive Autoencoders (V-Coders) have been developed based on Adaptive Resonance Theory which enables the learning of new patterns without discarding old information whilst learning the quality of each relation separately. Specifically, the V-Coder is inspired by cognitive science, incorporating inhibitory control and lateral inhibition for better data representation and reconstruction.

Most of the models discussed above are highly tailored and suited for anomaly detection tasks and do not possess the ability to generalize well for other tasks especially those requiring memory for temporal comprehension and processing. The challenge in generalization for these models becomes evident when it needs to extrapolate beyond the patterns stored in memory. This limitation arises because the model heavily relies on similarity-based updates and readings, potentially hindering its ability to adapt to entirely new or unforeseen patterns beyond its training experience and thus providing poor latent representations for inputs. For example; although MEMVAE was developed to enhance model representation capabilities on both tabular and time series data, reconstruction is heavily based on similarity with memory components. Similarly, the V-Coder is tailored for pattern recognition and reconstruction is based on similarity. Thus, the model is prone to misunderstand shifts and evolutions arising in the data and may struggle to capture and adapt to evolving semantics or changes in relations between entities. Additionally, it is also prone to catastrophic forgetting as the model has no explicit mechanism to retain information and thus it has no means to efficiently preserve context over time.

Temporal tasks benefit from models with 'good' memory mechanism that enable long-term memory coupled with short-term memory (which can be represented in various ways). These models are well-suited as they provide comprehensive context (that is, comprising both old and new information) for modelling. Similarly, when using autoencoders for temporal tasks, it becomes desirable to utilize memory mechanisms that yield superior and dependable latent representations of temporal inputs.

### SUMMARY

In one embodiment, a computer-implemented of training an encoder neural network comprises: receiving a data stream at an autoencoder, the autoencoder comprising the encoder neural network, a decoder neural network, a first memory layer, and a second memory layer; and incrementally training the encoder neural network on the data stream, wherein each training step of the incremental training comprises: receiving a portion of the data stream as input data at the encoder neural network; performing an encoding process on the input data by the encoder neural network to obtain (or learn) a latent representation of the input data; storing encoded input data that was generated by the encoder neural network during the encoding process in the first memory layer; processing the encoded input data and encoded input data stored in the first memory layer from previous iterations of the training steps to create a memory representation; storing the memory representation and the latent representation in the second memory layer; processing the memory representation and the latent representation to update the memory representation; performing a decoding process on the latent representation by the decoder neural network; storing decoded input data that was generated by the decoder neural network during the decoding process in the second memory layer; processing the decoded input data and the updated memory representation to refine the updated memory representation; and outputting the refined memory representation to the encoder neural network for use in the next training step.

In some embodiments, the encoder neural network comprises a plurality of encoder layers, and the encoded input data stored in the first memory layer is from at least the last encoder layer.

In some embodiments, the decoder neural network comprises a plurality of decoder layers, and wherein the decoded input data stored in the second memory layer is from at least the first decoder layer.

In some embodiments, processing comprises a non-linear transformation process. That is, any one or more of the processing of the encoded input data, the processing of the memory and latent representations, and the processing of the decoded input data and the updated memory representation may comprise a non-linear transformation process. The non-linear transformation processes may be different, the same, or partially the same.

In some embodiments, the data stream comprises incident related data.

In some embodiments, the encoded data comprises a learnable parameter.

In one embodiment, a computer-implemented method of online prediction comprises: training an online prediction model on a latent representation received from an encoder neural network that has been incrementally trained according to the aforementioned method; receiving real-time input data by the trained online prediction model; and processing the real-time input data by the trained online prediction model to generate a prediction.

In some embodiments, the online prediction model predicts an incident requiring deployment of an emergency responder.

In some embodiments, the real-time data comprises sensor data.

In one embodiment, a data processing apparatus comprises a memory storing computer-executable instructions to carry out the aforementioned method; and a processor configured to execute the instructions.

In one embodiment, an emergency management system comprises: the data processing apparatus; a computer aided dispatch system configured to receive the incident prediction and, in response, perform at least one of: output an alert; and transmit a message to a device of an emergency responder.

Embodiments may be implemented in digital electronic circuitry, or in computer hardware, firmware, software, or in combinations thereof. The invention may be implemented as a computer program or a computer program product, i.e., a computer program tangibly embodied in a non-transitory information carrier, e.g., in a machine-readable storage device or in a propagated signal, for execution by, or to control the operation of, one or more hardware modules.

A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The elements of a computer are a processor for executing instructions coupled to one or more memory devices for storing instructions and data.

The6nventtion is described in terms of particular embodiments. Other embodiments are within the scope of the following claims. For example, the steps of the invention may be performed in a different order and still achieve desirable results.

Elements of the invention have been described using the terms "processor", "input device" The skilled person will appreciate that such functional terms and their equivalents may refer to parts of the system that are spatially separate but combine to serve the function defined. Equally, the same physical parts of the system may provide two or more of the functions defined. For example, separately defined means may be implemented using the same memory and/or processor as appropriate.

### BRIEF DESCRIPTION OF THE DRAWINGS

Having thus described embodiments of the present invention in general terms, reference will now be made to the accompanying drawings, which are not necessarily drawn to scale, and wherein:
FIG. 1 is a schematic block diagram of an autoencoder according to embodiments;
FIG. 2 is a flowchart of a method of incrementally training an encoder neural network of the autoencoder illustrated in FIG. 1 according to embodiments;
FIG. 3 is a flowchart of an incremental training step of the method illustrated in FIG. 2 according to embodiments;
FIG. 4 schematically illustrates an overview of two incremental training steps according to embodiments;
FIG. 5 is a schematic block diagram of a data processing apparatus implementing a trained encoder neural network and an online prediction model according to embodiments;
FIG. 6 is a flowchart of a method of prediction performed by the data processing apparatus illustrated in FIG. 5 according to embodiments;
FIG. 7 is a schematic block diagram of an emergency response management system including the data processing apparatus illustrated in FIG. 5 according to embodiments;
FIG. 8 is a block diagram of computational means for implementations of methods according to embodiments.

### DETAILED DESCRIPTION

Some embodiments of the present invention now will be described more fully hereinafter with reference to the accompanying drawings, in which some, but not all embodiments of the invention are shown. Indeed, the invention may be embodied in many different forms and should not be construed as limited to the embodiments set forth herein. Like numbers refer to like elements throughout.

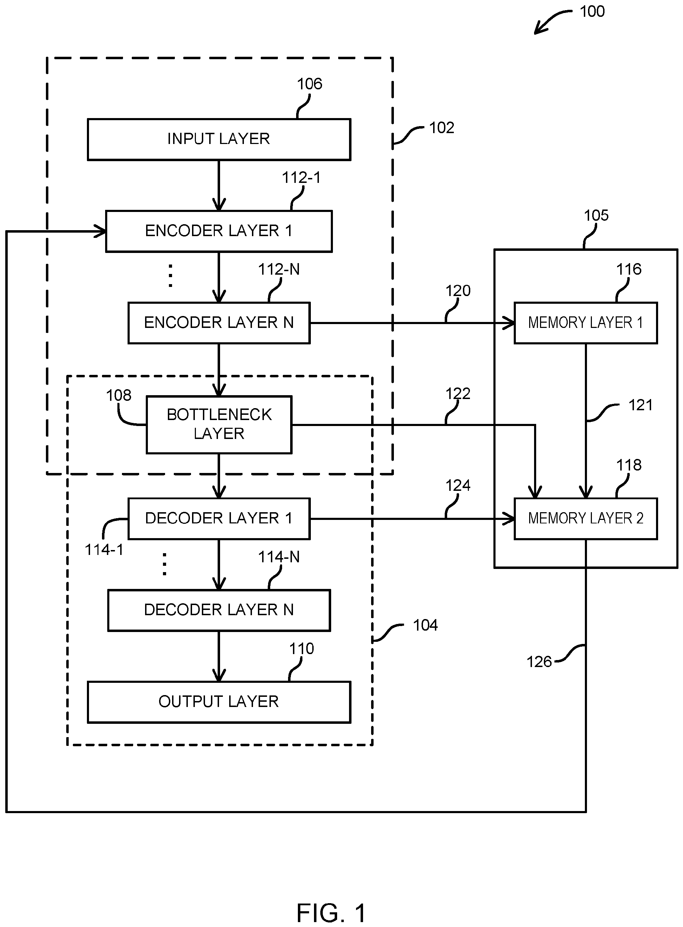

FIG. 1 is a schematic block diagram of an autoencoder 100 according to embodiments. The autoencoder 100 is a machine-learning model comprised of an encoder 102 and a decoder 104. The encoder 102 is a neural network (encoder neural network) comprising an input layer 106 that receives input data and one or more hidden layers that encode the input data. The bottleneck layer 108 is the last hidden layer of the encoder 102, and its output is a latent representation (latent space). The decoder 104 is also a neural network (decoder neural network) comprising one or more hidden layers that take the output of the bottleneck layer 108 as input (i.e., the bottleneck layer 108 is the first hidden layer of the decoder 104) to reconstruct the original input for output at the output layer 110. For convenience, and in the interest of clarity, the hidden layers of the encoder 102 other than the bottleneck layer 108 are referred to as encoder layers 112, where the encoder layer 112-1 directly after the input layer 106 is referred to as the first encoder layer and the encoder layer 112-N directly before the bottleneck layer 108 is referred to as the last encoder layer. Likewise, the hidden layers of the decoder 104 other than the bottleneck layer 108 are referred to as decoder layers 114, where the decoder layer 114-1 directly after the bottleneck layer 108 is referred to as the first decoder layer and the decoder layer 114-N directly before the output layer 114 is referred to as the last decoder layer.

The autoencoder 100 aims to minimize the difference between the input and the output (reconstructed input), i.e., the reconstruction loss. This may be done by minimizing a loss function. During training, the autoencoder 100 adjusts its parameters (the weights and biases of the neural network layers) to minimize this loss function. Mean Squared Error (MSE) and Binary Cross-Entropy (BCE) Loss are two examples of such a loss function.

It will be appreciated that the number of encoding and decoding layers, as well as the type and size of the encoding and decoding layers, may be varied (e.g., user-defined). Thus, the encoder 102 may comprise at least one encoding layer 112 and the decoder 104 may comprise at least one decoding layer 114. Where the encoder 102 comprises a plurality of encoding layers 112, and the decoder 104 comprises a plurality of decoding layers 114, the number of encoding layers 112 may be the same as the number of decoding layers 114 or may be different.

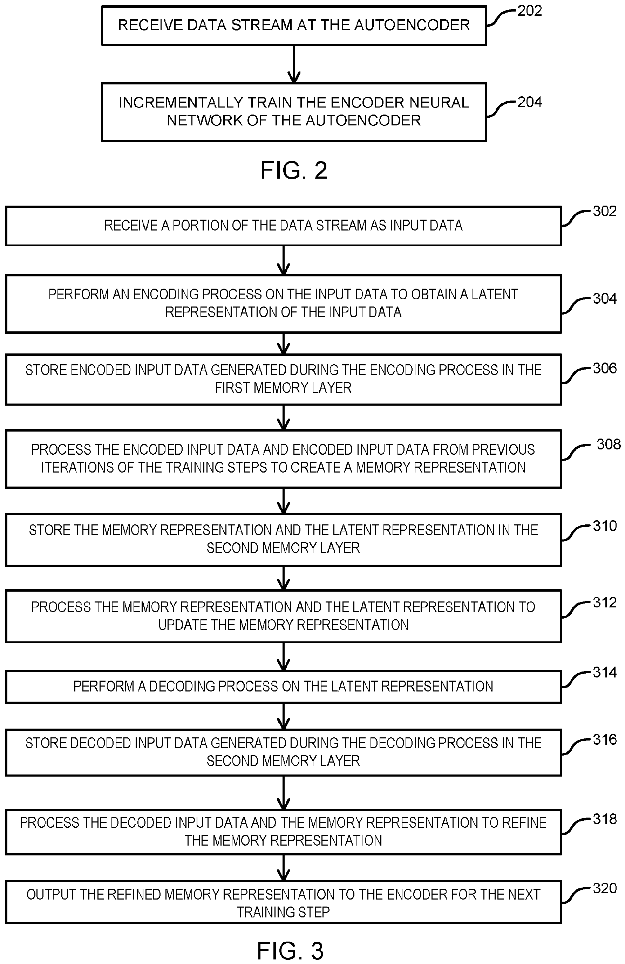

As illustrated in FIG. 1, the autoencoder 100 also includes a memory module 105 comprising a first memory layer 116 and a second memory layer 118. Broadly speaking, the first memory layer 116 stores encoded data 120 obtained from the encoder 102 over time, creating a memory representation 121 that enables the machine-learning model to understand patterns in the encoded data over time. The second memory layer 118 stores the interactions between the memory representation 121 and the model encoding (latent representation) 122, as well as the interactions between these encodings 121, 122 and decoded data 124 from the decoder 104, to inform the encoding process over time (as indicated by arrow 126). These will be described in more detail below with further reference to FIGS. 2 and 3.

FIG. 2 is a flowchart of a method of incrementally training an encoder neural network such as that of the autoencoder 100 illustrated in FIG. 1.

At step 202, a data stream (a sequence of data that arrives in a continuous and changing manner) is received by the autoencoder 100.

At step 204, the encoder 102 is incrementally trained on the data stream. The goal of the incremental training is to let the autoencoder 100 preserve existing knowledge and adapt to new data at the same time. To do this, the autoencoder 100 employs memory module 105. The incremental training can be likened to memory processes in the brain and may be summarized as follows:
(i) Encoding: creating new memories where information of interest is converted into a construct for retention;
(ii) Retention / Consolidation: the encoded information is then stored / retained. As part of this stage, memory consolidation occurs (that is, stabilization through long-term potentiation);
(iii) Retrieval: the retained information is accessed; and
(iv) Reconsolidation: memories are accessed and restabilized during which memories can be strengthened, weakened, or updated.

These processes of step 204 are described in more detail with reference to FIG. 3 in the context of an incremental training step.

At step 302, a portion of the data stream is received as input data by the encoder 102.

At step 304, the encoder 102 performs an encoding process on the input data to obtain (or learn) a latent representation of the input data.

At step 306, encoded input data that was generated by the encoder 102 during the encoding process is stored in the first memory layer 116. In general, the encoded data from any one or more of the encoding layers 112 may be stored in the first memory layer 116. However, in various embodiments the encoded data from at least the last encoder layer 112-N is stored in the first memory layer 116. Learning to capture an encoded structure over time and relevant features at the end of the encoding (compression) process may enhance memory retention.

At step 308, the encoded data stored in the first memory layer 116, and encoded input data that was generated by the encoder 102 and stored in the first memory layer 116 during previous iterations of the training steps, are processed in the first memory layer 116 to create a memory representation. The processing may comprise a non-linear transformation process, i.e., a mathematical manipulation that allows the network to learn patterns and relationships in the data. The memory representation can be viewed as a form of latent representation over time of the machine-learning model. Thus, the interaction of various encoded data over time involves the network's ability to combine, store, and manipulate new information it receives with the information it already possesses. This is conceptually synonymous to the creation of new memories in the brain memory process, although in the model it is not entirely "new" as new memory components are not created with each new dataset but rather a "new" view for the memory.

At step 310, the memory representation 121 from the first memory layer 116 and the latent representation 122 from the bottleneck layer 108 are stored in the second memory layer 118. The interaction between these representations initiates some form of consolidation in the second memory layer 118. Specifically, at step 312 the memory representation 121 and the latent representation 122 are processed to update (e.g., strengthen or weaken) the memory representation. The processing may comprise a non-linear transformation process, which may be the same as, or different from, the non-linear transformation process in step 308.

Conceptually, this interaction, propagation and transformations will encourage the strengthening and integration of information traces to form long-term memory.

At step 314, the decoder 104 performs a decoding process on the latent representation.

At step 316, the decoded input data that was generated by the decoder 104 during the decoding process is stored in the second memory layer 118.

At step 318, the decoded input data and the updated memory representation are processed in the second memory layer 118 to refine the memory representation (i.e., further update for example strengthen or weaken). The processing may comprise a non-linear transformation process, which may be the same as, or different from, either or both of the non-linear transformation processes in steps 308 and 310. This step is essentially a refinement of the memory as it uses the model's decoded data compared to the information processed in the second memory layer to highlight key aspects in the data through non-linear transformation. As in step 306, the decoded input data may be taken from any one or more of the hidden layers of the decoder neural network 104. In embodiments, the decoded data comprises at least decoded data from the first decoder layer 114-1 of the decoder 104. Learning to capture relevant features at the beginning of decoding (reconstruction) process may enhance memory retention. Conceptually, this is synonymous to reconsolidation in the brain, where old memories are accessed and restabilized to be preserved. This process provides an opportunity to modify seemingly stable memories, even for memories that are very old.

At step 320, the refined (further updated) memory representation is output to the encoder 102 for use in the next training step. In embodiments, the refined memory representation is accessed by the first encoding layer of the encoder 102. Conceptually, this is similar to the retrieval process in the brain, where stored memories are accessed and go to working memory for conscious thinking and decision-making.

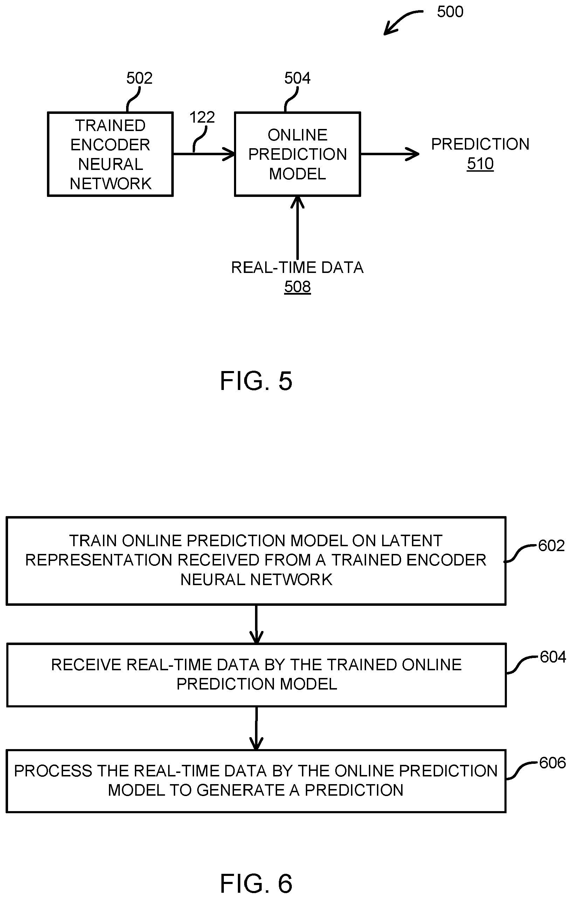

Thus, embodiments mirror the Complementary Learning Systems (CLS) of the brain and allow for more explicit feature identification and extraction - through the separation (encoding in one layer and the second layer for decoding) and interaction (encoded data representation over time, then encoded data representation and latent representation and finally this with the decoded data) of the different data types. Embodiments first extract crucial aspects for encoding and then support the decoding of those aspects as accurately as possible by highlighting relevant features when combined with the model's decoded data. This supports improved feature extraction and compression efficiency leading to better latent representations and, ultimately, better prediction when used in conjunction with an online prediction model as described with reference to FIGS. 5 and 6.

To establish how and to what extent data is copied into the memory module 105, three different options are provided.

In one embodiment, static learning parameters are used. In this embodiment, information is fully copied from an encoder/decoder layer.

In another embodiment, integral dynamic learning parameters are used. Here, additional learnable parameters are introduced to the autoencoder 100 (either as a parallel layer or as part of the hidden layers of the encoder / decoder) to learn how much new information is required to supplement the memory and thus dynamically preserve the historical context. The parameter(s) for updating the memory can be defined in a regularization term and added to the loss function. During training, the model learns to adjust the learnable parameter(s) to minimize the loss function. The parameter(s) is learnt only during training. The learnable parameter is updated either directly from the activation of the parallel or hidden layer(s) or based on the model.

In another embodiment, independent dynamic learning parameters are used. Here, learnable parameter(s) (not directly included in the model) are randomly initialized to control how much new information is required to supplement the memory and thus dynamically preserve the historical context. The parameter(s) for updating the memory module 105 is defined in a regularization term and added to the loss function. During training, the model learns to adjust the learnable parameter(s) to minimize the loss function. The parameter(s) is learnt during training. The learnable parameter is updated based on the model.

Thus, embodiments provide an incrementally trained autoencoder with dynamic memory to support online processing models that may mitigate real-time lag, catastrophic forgetting, comprehensive feature extraction, and/or computational efficacy. The formalized memory dynamically determines how information is preserved and utilized. More specifically, the employment of the memory module 105 ensures that relevant information can be used in a timely and computational efficient manner whilst retaining and employing the relevant historical context for prediction. Varying weights are assigned to different levels of implicit representation or embedding. Here, these weights are not static but are dynamically assigned specifically for memory copying. The memory structure loosely formalizes four key processes in brain memory dynamics and employs self-learning to dynamically update and process information at different layers for preservation in the memory. Embodiments thereby ensure computational efficiency while minimizing real-time delays for real-time processing and prediction. It is noted that the emphasis of the training regimens lies in the manner and timing of information utilization within the model as opposed to the learning process per se.

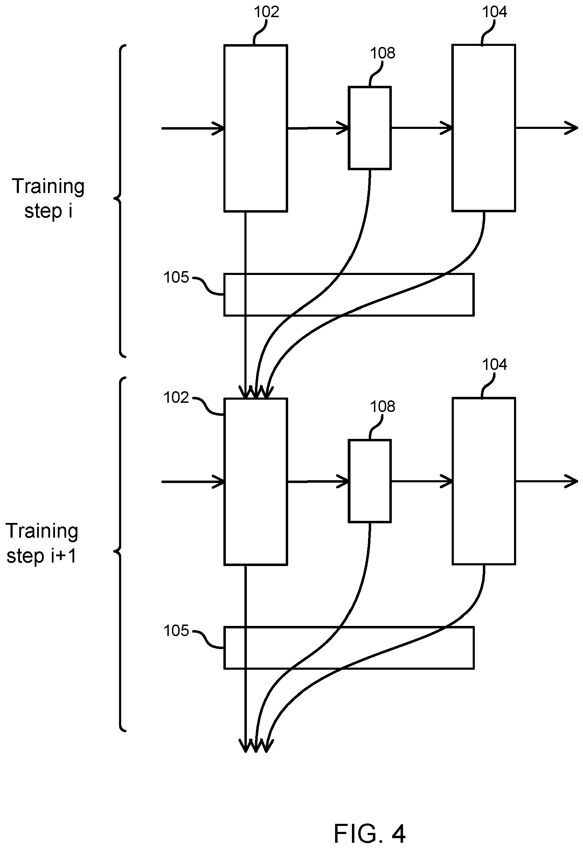

FIG. 4 provides a summary of the incremental training process in real-time. In training step i, outputs from the encoder 102, the bottleneck layer 108, and the decoder 104 are input to the memory module 105, as described above with reference to FIG. 3. The output from the memory module 105 is input to the encoder 102 for the next training step i+1.

FIG. 5 is a schematic block diagram of a data processing apparatus 500 comprising a trained encoder neural network 502 and an online prediction model 504. In embodiments, the encoder neural network 502 has been incrementally trained according to the methods described with reference to FIGS. 2 and 3. The online prediction model 504 may be trained on the latent representation output by the encoder neural network 502 and generate a prediction from real-time data. Thus, the data processing apparatus 500 may support low latency and nearer real-time representation as the online prediction model 504 typically does not need to be retrained, as is the case with offline models, and coupled with the trained encoder neural network 502 possesses a robust memory which preserves information over longer periods. The retraining latency and retraining cost (computational cost) associated with offline models may therefore be mitigated or eliminated. Furthermore, catastrophic forgetting in the online prediction model 504 may also be mitigated or eliminated. It is noted that the trained encoder neural network 502 may be taken offline for incremental training without affecting the functioning of the online prediction model 504.

In embodiments, the trained encoder neural network 502 may have been incrementally trained on incident related data and the prediction model 504 may generate incident predictions. As used herein, the term "incident" refers to any event to which an emergency responder may be expected to respond. Examples of incidents include crimes, road accidents, fires, medical emergencies, fires, natural disasters such as earthquakes, tsunamis, and so on. Data about or relating to such incidents, i.e., incident related data, may be gathered in different ways. For example, people in need of assistance or people who may have observed an incident can report it to an emergency service. Such a report is typically referred to as a "call" for an emergency service. Incident related data may be extracted automatically from a call to an emergency dispatch operator using call analysis software. Incident related data may also be extracted automatically from other sources such as from social media posts (e.g. text data), data from sensors (e.g., visual data, audio data, weather data, environmental data, traffic data, location data, time data, etc.), and so on.

FIG. 6 is a flowchart of a method of prediction performed by the data processing apparatus illustrated in FIG. 5.

At step 602, the prediction model 504 may be trained on a latent representation 122 received from the trained encoder neural network 502. The encoder neural network 502 may have been incrementally trained according to the methods described with reference to FIGS. 2 and 3.

At step 604, the online prediction model 504 receives real-time data 508. The real-time data may comprise sensor data. The type of data may depend on the task for which the online prediction model 504 is being employed. For example, for predicting traffic accidents the sensor data may comprise traffic data, time data, location data, weather data, or any combination thereof, obtained from any suitable sensor such as traffic cameras, GPS-based applications, anemometer sensors, etc.

At step 606, the online prediction model 504 processes the real-time data to generate a prediction. In some embodiments, the online prediction model 504 generates an incident prediction.

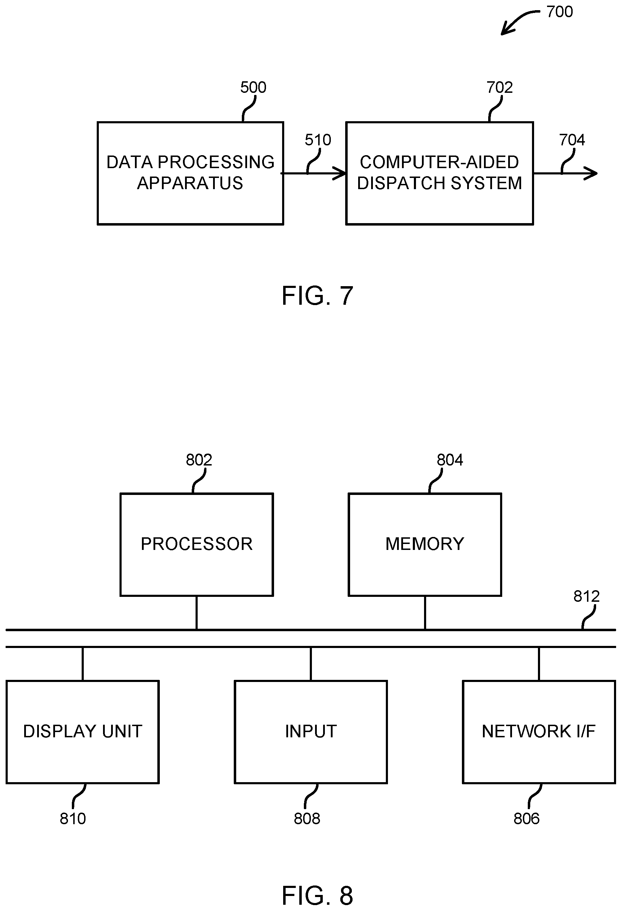

FIG. 7 is a schematic block diagram of an emergency management system 700 including the data processing apparatus 500 illustrated in FIG. 5. The emergency management system 700 supports communications, data gathering, data analysis, and decision-making for emergencies. By introducing the data processing apparatus 500, the emergency response system 700 does not simply react to incidents but may analyze real-time data to predict incidents and act before they occur. For example, as shown in FIG. 7, the data processing apparatus 500 may be communicatively coupled to a computer-aided dispatch system 702. Computer-aided dispatch systems are utilized by dispatchers, call-takers, and operators to prioritize and record incident calls, identify the status and location of responders in the field, and effectively dispatch responder personnel. Here, the computer-aided dispatch system 702 may automatically respond in any number of ways in response to receiving an incident prediction from the data processing apparatus 500. For example, the computer-aided dispatch system 702 may generate an alert on an interface of the computer-aided dispatch system 702.

Such an alert may be a visual alert on a display, an audible alert on a speaker, and/or any other kind of alert informing of the incident prediction. In another example, the computer-aided dispatch system 702 may automatically initiate transmission of a message to an emergency responder via a mobile data terminal, radio, mobile phone, or the like. (Of course, a safeguard such as a human override may be implemented.) The message may indicate that an incident is predicted. The message may convey information about the predicted incident. For example, the information may comprise location information. In this case, the message may also convey a request for an emergency responder to attend the location. Thus, the emergency management system 700 may be implemented as a computing device (e.g., server) that is connected to a variety of other computing devices and systems (e.g., user interfaces, databases, geographic information systems, vehicle location systems, etc.) and networks (e.g., telecommunications networks).

Emergency management systems may be latency-critical systems in the sense that they may need to gather data, analyze that data, and then decide on a course of action as quickly as possible. The combination of the encoder neural network 502 and the online prediction model 504 in the data processing apparatus 500, which, as noted above, may mitigate or eliminate latency is therefore well-suited for such systems. Furthermore, employing the data processing apparatus 500 may also eliminate call filter processes that are conventionally used as part of the incident prediction since the model uses its internal memory for appropriate and comprehensive historical context. Moreover, it does not infer any implicit assumptions between emergencies. It also reduces the computational overhead associated with managing multiple models. The proposed model prioritizes timeliness and accuracy, making it ideal for capturing up-to-date and evolving data.

The invention aims to enhance modelling by incorporating explicit brain intricacies, to support the provision of historical context and eliminate the need for periodic retraining. Specifically, the memory intricacies encourage the model to flexibly store and retrieve information in an adaptive manner. This historical context ensures the model is positioned for modelling complex dynamics. Furthermore, the prediction model may be trained for all types of emergencies, facilitating its capacity to identify interrelationships and interdependencies amongst various incidents spanning multiple sectors. This versatility enables the model to achieve a high level of generalization for various incidents while maintaining specialization for each emergency services.

FIG. 8 is a block diagram of a computing device, such as a data processing apparatus 500, which embodies the present invention, and which may be used to implement a method of an embodiment of incremental training of a machine-learning model and/or a method of an embodiment of incident prediction. The computing device comprises a processor 802 and memory 804. Optionally, the computing device also includes a network interface 806 for communication with other computing devices, for example with other computing devices of invention embodiments. For example, an embodiment may comprise a network of such computing devices. Optionally, the computing device also includes one or more input mechanisms 808 such as keyboard and mouse, and a display unit 810 such as one or more monitors. The components are connectable to one another via a bus 812.

The memory 804 may include a computer readable medium, a term which may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general-purpose computer, special purpose computer, or special purpose processing device (e.g., one or more processors) to perform one or more functions or operations. Thus, the term "computer-readable storage medium" may also include any medium that can store, encode, or carry out a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 802 is configured to control the computing device and execute processing operations, for example executing code stored in the memory to implement the various different functions of machine-learning models and components thereof as described here and in the claims. The memory 804 stores data being read and written by the processor 802. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an ASIC, a FPGA, a digital signal processor (DSP), network processor, or the like. In one or more embodiments, a processor is configured to execute instructions for performing the operations and steps discussed herein.

The display unit 810 may display a representation of data stored by the computing device and may also display a cursor and dialog boxes and screens enabling interaction between a user and the programs and data stored on the computing device. The input mechanisms 808 may enable a user to input data and instructions to the computing device.

The network interface (network I/F) 806 may be connected to a network, such as the Internet, and is connectable to other such computing devices via the network. The network I/F 806 may control data input/output from/to other apparatus via the network. Other peripheral devices such as microphone, speakers, printer, power supply unit, fan, case, scanner, trackerball, etc. may be included in the computing device.

An autoencoder may comprise processing instructions stored on a portion of the memory 804, the processor 802 to execute the processing instructions, and a portion of the memory 804 to store weights, biases, and other information concerning the autoencoder architecture during the execution of the processing instructions. The final trained weights and biases of the encoder may be stored on the memory 804 and/or on a connected storage unit, and may be transmitted, transferred or otherwise communicated to further components.

A prediction model may comprise processing instructions stored on a portion of the memory 804, the processor 802 to execute the processing instructions, and a portion of the memory 804 to store prediction model weights, biases, and other information concerning the prediction model during the execution of the processing instructions. The final trained weights and biases of the prediction model may be stored on the memory 804 and/or on a connected storage unit, and may be transmitted, transferred or otherwise communicated to further components.

Methods embodying the present invention may be carried out on a computing device such as that illustrated in FIG. 8. Such a computing device need not have every component illustrated in FIG. 8 and may be composed of a subset of those components. Methods embodying the present invention may be carried out by a single computing device in communication with one or more data storage servers via a network. The computing device may be a data storage itself storing trained model weights and/or biases, training datasets, model hyperparameters, etc.

A method embodying the present invention may be carried out by a plurality of computing devices operating in cooperation with one another. One or more of the plurality of computing devices may be a data storage server storing at least a portion of trained model weights and/or biases, training datasets, model hyperparameters, etc.

The various methods described above may be implemented by a computer program. The computer program may include computer code (e.g., instructions) arranged to instruct a computer to perform the functions of one or more of the various methods described above. For example, the steps of the methods described in relation to FIGS. 2, 4, and 8 may be performed by the computer code. The steps of the methods described above may be performed in any suitable order. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD. The instructions may also reside, completely or at least partially, within the memory 804 and/or within the processor 802 during execution thereof by the computing system, the memory 804 and the processor 802 also constituting computer-readable storage media.

In an implementation, the modules, components and other features described herein may be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may comprise a special-purpose processor, such as an FPGA or an ASIC. A hardware component may also include programmable logic or circuitry that is temporarily configured by software to perform certain operations.

In addition, the modules and components may be implemented as firmware or functional circuitry within hardware devices. Further, the modules and components may be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "processing", "performing", "generating", "storing", "receiving", "inputting", "outputting", "training", "encoding", "decoding", or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

While certain embodiments have been described, these embodiments have been presented by way of example only and are not intended to limit the scope of the inventions. Indeed, the novel methods and apparatuses described herein may be embodied in a variety of other forms; furthermore, various omissions, substitutions and changes in the form of methods and apparatus described herein may be made.

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A computer-implemented method of training an encoder neural network, the method comprising:
receiving a data stream at an autoencoder, the autoencoder comprising the encoder neural network, a decoder neural network, a first memory layer, and a second memory layer; and
incrementally training the encoder neural network on the data stream, wherein each training step of the incremental training comprises:
receiving a portion of the data stream as input data at the encoder neural network;
performing an encoding process on the input data by the encoder neural network to obtain a latent representation of the input data;
storing encoded input data that was generated by the encoder neural network during the encoding process in the first memory layer;
processing the encoded input data and encoded input data stored in the first memory layer from previous iterations of the training steps to create a memory representation;
storing the memory representation and the latent representation in the second memory layer;
processing the memory representation and the latent representation to update the memory representation;
performing a decoding process on the latent representation by the decoder neural network;
storing decoded input data that was generated by the decoder neural network during the decoding process in the second memory layer;
processing the decoded input data and the updated memory representation to refine the updated memory representation; and
outputting the refined memory representation to the encoder neural network for use in the next training step.

2. The computer-implemented method of claim 1, wherein the encoder neural network comprises a plurality of encoder layers, and the encoded input data stored in the first memory layer is from at least the last encoder layer.

3. The computer-implemented method of claim 1 or 2, wherein the decoder neural network comprises a plurality of decoder layers, and wherein the decoded input data stored in the second memory layer is from at least the first decoder layer.

4. The computer-implemented method of any one of the preceding claims, wherein processing comprises a non-linear transformation process.

5. The computer-implemented method of any one of the preceding claims, wherein the data stream comprises incident related data.

6. The computer-implemented method of any one of the preceding claims, wherein the encoded data comprises a learnable parameter.

7. A computer-implemented method of online prediction, the method comprising:
training an online prediction model on a latent representation received from an encoder neural network that has been incrementally trained according to the method of any one of claims 1 to 6;
receiving real-time input data by the trained online prediction model; and
processing the real-time input data by the trained online prediction model to generate a prediction.

8. The method of claim 7, wherein the online prediction model predicts an incident requiring deployment of an emergency responder.

9. The method of claim 7 or 8, wherein the real-time data comprises sensor data.

10. A data processing apparatus, comprising:
a memory storing computer-executable instructions to carry out the method of any of claims 1 to 8; and
a processor configured to execute the instructions.

11. An emergency management system, comprising:
the data processing apparatus of claim 10;
a computer aided dispatch system configured to receive the incident prediction and, in response, perform at least one of:
output an alert; and
transmit a message to a device of an emergency responder.

12. A computer program comprising instructions which, when the program is executed by a computer, cause the computer to carry out the method of any of claims 1 to 9.

13. A non-transitory computer-readable storage medium comprising instructions which, when executed by a computer, cause the computer to carry out the method of any of claims 1 to 9.

## Amended claims

### Amended claims in accordance with Rule 137(2) EPC.

1. An emergency management system (700), comprising:
a data processing apparatus (500) comprising a processor (802) and a computer-readable storage medium (804) storing instructions which, when executed by the processor (802), cause the data processing apparatus (500) to perform an online prediction by:
training (602) an online prediction model (504) on a latent representation received from a trained encoder neural network (502), wherein the trained encoder neural network (502) has been incrementally trained by:
receiving (202) a data stream at an autoencoder, the data stream comprising incident related data, the autoencoder comprising an encoder neural network (102), a decoder neural network (104), a first memory layer (116), and a second memory layer (118); and
incrementally (204) training the encoder neural network (102) on the data stream, wherein each training step of the incremental training comprises:
receiving (302) a portion of the data stream as input data at the encoder neural network;
performing (304) an encoding process on the input data by the encoder neural network to obtain a latent representation of the input data;
storing (306) encoded input data that was generated by the encoder neural network during the encoding process in the first memory layer;
processing (308) the encoded input data and encoded input data stored in the first memory layer from previous iterations of the training steps to create a memory representation;
storing (310) the memory representation and the latent representation in the second memory layer;
processing (312) the memory representation and the latent representation to update the memory representation;
performing (314) a decoding process on the latent representation by the decoder neural network;
storing (316) decoded input data that was generated by the decoder neural network during the decoding process in the second memory layer;
processing (318) the decoded input data and the updated memory representation to refine the updated memory representation; and
outputting (310) the refined memory representation to the encoder neural network for use in the next training step;
receiving (604) real-time sensor data (508) by the trained online prediction model (504); and
processing (606) the real-time sensor data (508) by the trained online prediction model (504) to generate a prediction of an incident requiring deployment of an emergency responder; and
a computer-aided dispatch system (702) configured to receive the prediction and, in response, perform at least one of: output an alert; and transmit a message to a device of the emergency responder.

2. The emergency management system (700) of claim 1, wherein the encoder neural network comprises a plurality of encoder layers, and the encoded input data stored in the first memory layer is from at least the last encoder layer.

3. The emergency management system (700) of claim 1 or 2, wherein the decoder neural network comprises a plurality of decoder layers, and wherein the decoded input data stored in the second memory layer is from at least the first decoder layer.

4. The emergency management system (700) of any one of the preceding claims, wherein any one or more of the processing (308) the encoded input data, processing (312) the memory representation; and/or processing (318) the decoded input data comprises a non-linear transformation process.

5. The emergency management system (700) of any one of the preceding claims, wherein the encoded data comprises a learnable parameter.

6. A computer program comprising instructions which, when the program is executed by a computer, cause the computer to carry out the method of claim 1.

7. A non-transitory computer-readable storage medium comprising instructions which, when executed by a computer, cause the computer to carry out the method of claim 1.
